# EUROPEAN PATENT APPLICATION

(11) **EP 2 175 609 A1**
(43) Date of publication of application: **14.04.2010**
(21) Application number: 08305659.8
(22) Date of filing: 09.10.2008
(51) Int. Cl.: H04L 29/08, H04L 29/06, G06F 21/00

(54) **User-assisted privacy data management system in a multi-service environment**

(71) Applicant: Alcatel Lucent, 75008 Paris (FR)
(72) Inventor: Kamga, Guy-Bertrand, 91620, NOZAY (FR); Betge-Brezetz, Stéphane, 91620, NOZAY (FR); Dupont, Marie-Pascale, 91620, NOZAY (FR); Piekarec, Sophie, 91620, NOZAY (FR)
(74) Representative: Hedarchet, Stéphane

(57) **Abstract**

The invention relates to a user-assisted privacy data management system in a multi-service environment, comprising a user privacy data management module (1) adapted to receive privacy data preferences set by end-users for existing services, and a user privacy data setting request transmitter (3) adapted to transmit a privacy data setting request related to a new or an updated service or when a user tries to use a service for which privacy data preferences have not been set.

## Description

The present invention is related to a user-assisted privacy data management system in a multi-service environment.

Nowadays, several services such as voice communication (on mobile and fixed infrastructure), e-commerce, targeted Ad, social networking, mobile TV, IPTV are provided to users under subscription or free access by service operators. Each user can subscribe to several services provided by the same service operator or by several service operators. When a user subscribes for a service or accesses a service for the first time, some private information such as date of birth, contact means, hobbies, etc. are requested. Service operators applying a privacy policy, also invite the user to set some values related to the management of his personal data.

The problem for the user is then to be able to trust each service operator and to control his personal data for each service he subscribed to or for each service he usually uses. The experience about Internet and other communication service usages proves that it's tedious and sometimes complicated for the user to set the same personal data and the related privacy policy while registering or accessing a new service. Moreover, some users are reluctant to give some personal data and often prefer to miss some services and this situation is also harmful for service operators.

Some existing solutions based on W3C/P3P (Platform for Privacy Preferences) are made for some specific services provided on the Web (news, search, e-commerce, ...). These solutions allow the user to control his privacy using an User Agent. But the user has to set his privacy preferences whenever he changes his device and the used device must be equipped with a P3P enabled Web browser.

Other solutions such as Passport^{™} from Microsoft and solutions based on Liberty Alliance specifications (Single Sign On, etc.) allow service providers to federate the identities of their end-users. However, they do not integrate flexible ways for end-users to set or update their privacy preferences as the service privacy model evolves. They neither tackle service privacy meta-data management that would take into account any kind of service, regardless of service operator.

It also exists some private companies (such as TRUSTe, www.truste.com) making "privacy certification" by checking the web site privacy policy according to predefined criteria. If the web site satisfies these criteria, they deliver a label (or certificate) with a logo that can be displayed in each web page and that reassures the end-user with respect to his privacy. However, the privacy criteria are predefined by these privacy certification companies and the user cannot define his own privacy. Moreover, it only deals with privacy management on the web and not for a large scope of services.

Other solutions based on SIP/SIMPLE Presence management specifications exist. However, they especially allow user to manage his privacy preferences for presence service (by specifying which watcher can access to his presence information and which part of presence data can be accessed by authorized watchers). These solutions do no include mechanisms to dynamically support new types of services (and not only presence) that are subscribed or offered to the end-user, and to manage the way privacy will be defined by the end-user for these services.

As a consequence, no solution is offered to easily manage the user privacy related to all services the user may benefit from, regardless of service provider and whatever the device used.

There is therefore a need for the user to easily manage and control his personal data for all services he may benefit from, regardless of service operators. A trusted system is necessary to centralize and manage service oriented user privacy data, using a common service privacy model (regardless of service operators).

This user-assisted privacy management in a multi-service environment would benefit both end-users and service operators. End-users could reveal more personal data and authorized services could access more user data to improve their efficiency for personalized applications.

The object of the present invention, according to an embodiment, is a user-assisted privacy data management system in a multi-service environment, comprising a user privacy data management module adapted to receive privacy data preferences set by end-users for existing services, and a user privacy data setting request transmitter (3) adapted to transmit a privacy data setting request related to a new or an updated service or when a user tries to use a service for which privacy data preferences have not been set.

The invention allows the end-user to easily manage his privacy preferences related to all services he may benefit from, regardless of service providers.

It is related to a user-centric environment (to manage in a more interactive and less laborious way) increasing the quality of experience of the end-user.

The invention has in particular the following advantages:
- for service providers : It will improve the trust of end-users about their services. They will be able to gain and retain more clients (customers), access more end-users personal data, then improving the efficiency of the services they provide.
- for end-users : It will improve the end-user experience. They could benefit from more personalized services while protecting their personal data.

According to an embodiment, the system according to the invention further comprises a User Privacy Query Management module adapted to allow service providers to :
- access the end-user authorized personal data,
- query the end-user privacy preferences,
- request, via the User Privacy Setting Request Transmitter (3), for end-user privacy data update when some useful data are missing.

According to a further embodiment, the system according to the invention comprises a User Privacy Database adapted to store data related to the end-users comprising:
- personal data
- privacy preferences
- information about whether to be notified or not when privacy model changes
- preferred notification channel.

According to a further embodiment, the system according to the invention comprises a Service Oriented Privacy Policy Management module adapted to:
- authenticate service providers
- manage services repository (creation, deletion, update, query) and all related meta-data
- manage (creation, deletion, update, query) privacy data policy related to a service
- store said data and meta-data in the service privacy database
- update automatically end-user privacy data when service data or meta-data change.

According to a further embodiment, the system according to the invention comprises a Service Privacy Database adapted to store the internal data required to identify services and related meta-data, given that the service definition regardless of service provider could be based on a common service model using an ontology to which said database 6 is linked.

According to a further embodiment, the system according to the invention comprises a Privacy Model Change Monitoring module (7) adapted to monitor changes in the service privacy model (service data and meta-data), in order to decide whether to transmit a privacy setting request to end-users or not, depending on their respective interests.

According to a further embodiment, the system according to the invention is hosted by a trusted and certified entity, such as a Privacy Data Service Operator, appointed by the public authorities to manage and provide User Privacy Data Service to service providers.

According to a further embodiment, the system according to the invention is hosted by an independent entity managing user privacy data for all the services provided by one or several providers.

Other objects and further features of the present invention will be apparent from the following detailed description when read in conjunction with the accompanying drawing :

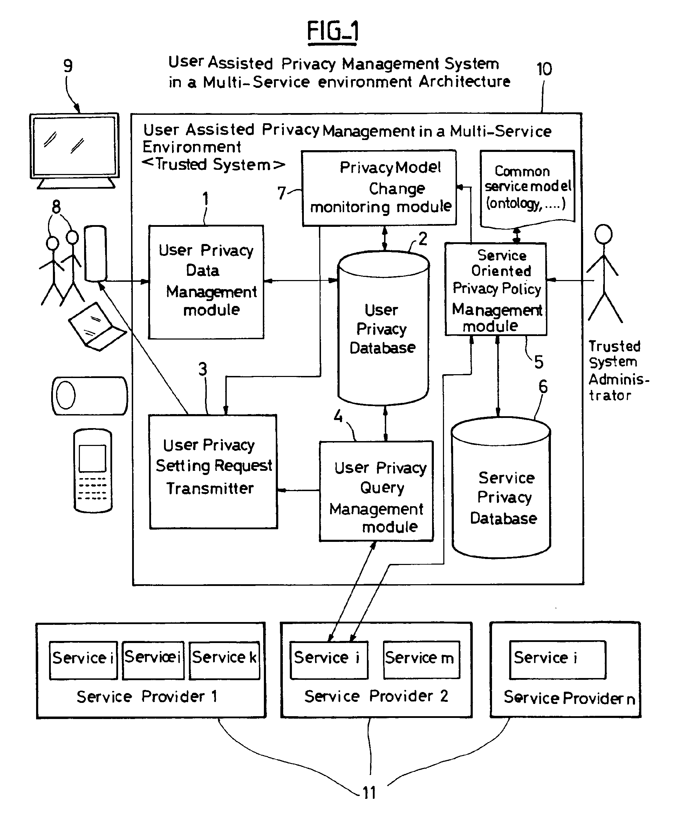

Fig. 1 illustrates a schematic embodiment of the system according to the invention.

A description will be hereinafter given of embodiments of the present invention, by referring to the drawings.

Figure 1 depicts a user-assisted privacy data management system 10. The system 10 comprises the following modules :
- a **User Privacy Data Management module 1:**

This module is adapted to:
- authenticate the end-users 8,
- receive and manage (creation, deletion, update) the end-user privacy data, his privacy preferences, etc,
- provide adaptive Generic User Interface (GUI) allowing end-user to visualize and manage his privacy data from several types of devices (PC, PDA, Set-Top-Box/TV, mobile phone, etc., as illustrated in the figure 1 as reference 9).
- a **User Privacy Database 2:**

The database 2 stores all data related to the end-users:
- personal data
- privacy preferences
- information about whether to be notified or not when privacy model changes
- preferred notification channel, etc.
- a **User Privacy Setting Request Transmitter 3:**

The transmitter 3 allows to notify the end-user when some user privacy data need to be set or updated. The request could be sent using standard channels such as SMS, Email, etc. Moreover, the transmitter 3 may notify the end-user using a peer transmission agent located on the end-user's device.
- a **User Privacy Query Management module 4:**

This management module 4 allows service providers 11 to :
- access the end-user authorized personal data
- query the end-user privacy preferences
- request for end-user privacy update when some useful data are missing (using the User Privacy Setting Request Transmitter module)
- a **Service Oriented Privacy Policy Management module 5:**

The management module 5 is adapted to:
- authenticate service provider 11
- manage services repository (creation, deletion, update, query) and all related meta-data. As a matter of fact, each service needs to define some meta-data such as domains (Health, Ad, News, Entertainment, E-commerce,...), the user personal data it needs to access, what it does with the user data, etc. Moreover, each service may be added or updated dynamically by any authorized (trusted) service provider using simple interfaces.
- manage (creation, deletion, update, query) privacy policy related to a service
- store them in the service privacy database (data and meta-data).
- Update automatically end-user privacy data when service data or meta-data change.
- a **Service Privacy Database 6:**

This database 6 stores the internal data required to identify services and related meta-data. Service definition regardless of service provider could be based on a common service model using an ontology for instance to which said database 6 is linked.
- a **Privacy Model Change Monitoring module 7** :

The monitoring module 7 monitors change in the service privacy model (service data and meta-data), in order to decide whether to transmit a privacy setting request to end-user or not, depending on his interests.

Indeed, if the change is related to a service which matches the end-user interests, this module 7 transmits a request to the end-user, inviting him to set or update his privacy preferences (using the User Privacy Setting Request Transmitter 3).

It has to be noted that this system 10 may be hosted by a trusted and certified entity, for instance a Privacy Data Service Operator, appointed by the public authorities to manage and provide User Privacy Data Service to service providers. However, the system 10 could also be hosted by an independent entity managing user privacy data for all the services provided by one or several providers.

## Claims

1. A user-assisted privacy data management system in a multi-service environment, comprising a user privacy data management module (1) adapted to receive privacy data preferences set by end-users for existing services, and a user privacy data setting request transmitter (3) adapted to transmit a privacy data setting request related to a new or an updated service or when a user tries to use a service for which privacy data preferences have not been set.

2. The system according to claim 1, **characterized in that** it further comprises a User Privacy Query Management module (4) adapted to allow service providers (11) to :
- access the end-user authorized personal data,
- query the end-user privacy preferences,
- request, via the User Privacy Setting Request Transmitter (3), for end-user privacy data update when some useful data are missing.

3. The system according to claim 1 or 2, **characterized in that** it comprises a User Privacy Database (2) adapted to store data related to the end-users comprising:
- personal data
- privacy preferences
- information about whether to be notified or not when privacy model changes
- preferred notification channel.

4. The system according to any of previous claims, **characterized in that** it comprises a Service Oriented Privacy Policy Management module (5) adapted to:
- authenticate service providers (11)
- manage services repository (creation, deletion, update, query) and all related meta-data
- manage (creation, deletion, update, query) privacy data policy related to a service
- store said data and meta-data in the service privacy database
- update automatically end-user privacy data when service data or meta-data change.

5. The system according to any of previous claims, **characterized in that** it comprises a Service Privacy Database (6) adapted to store the internal data required to identify services and related meta-data, given that the service definition regardless of service provider could be based on a common service model using an ontology to which said database 6 is linked.

6. The system according to any of previous claims, **characterized in that** it comprises a Privacy Model Change Monitoring module (7) adapted to monitor changes in the service privacy model (service data and meta-data), in order to decide whether to transmit a privacy setting request to end-users or not, depending on their respective interests.

7. The system according to any of previous claims, **characterized in that** it is hosted by a trusted and certified entity, such as a Privacy Data Service Operator, appointed by the public authorities to manage and provide User Privacy Data Service to service providers.

8. The system according to any of claims 1 to 6, **characterized in that** it is hosted by an independent entity managing user privacy data for all the services provided by one or several providers.
